# EUROPEAN PATENT SPECIFICATION

(11) **EP 0 576 180 B1**
(45) Date of publication and mention of the grant of the patent: **13.11.1996**
(21) Application number: 93304569.2
(22) Date of filing: 11.06.1993
(51) Int. Cl.: B60J 1/00

(54) **Vehicular panel assembly**
Plattenaufbau eines Fahrzeuges
Assemblage d'un panneau de véhicule

(30) Priority: 12.06.1992 US 897764
(43) Date of publication of application: 29.12.1993
(73) Proprietor: DONNELLY CORPORATION, Holland Michigan 49423 (US)
(72) Inventor: Agrawal, Raj K., Holland, Michigan 49424 (US); Crank, Douglas, Holland, Michigan 49423 (US)
(74) Representative: Wright, Simon Mark

(56) References cited:
- EP-A- 0 163 194
- EP-A- 0 371 810
- PATENT ABSTRACTS OF JAPAN, unexamined applications, M field, vol. 12, no. 356, September 26,1988 THE PATENT OFFICE JAPANESE GOVERNMENT page 8 M 745
- PATENT ABSTRACTS OF JAPAN, unexamined applications, M field, vol. 12, no. 126, April 19, 1988 THE PATENT OFFICE JAPANESE GOVERNMENT page 47 M 687
- PATENT ABSTRACTS OF JAPAN, unexamined applications, M field, vol. 12, no. 134, April 23, 1988 THE PATENT OFFICE JAPANESE GOVERNMENT page 149 M 689

## Description

In a first aspect, this invention relates to a method for manufacturing a panel assembly, comprising the steps of locating a preformed gasket in a retaining fixture and bonding said gasket to a surface of a panel.

Relatively recently in the history of vehicle panel assemblies, gaskets have been moulded or extruded directly onto the window panel. In moulded window panels, a sheet of glass is enclosed within a moulding tool and a polymeric material is then injected around the opposing surfaces of the peripheral edge, thereby capturing the peripheral edge of the glass panel within the injected polymeric gasket. After the gasket is cured or hardened, the mould is opened and the panel assembly is removed. To retain the moulded panel assembly within the vehicle, studs or clips may be moulded within the gasket and used to engage a pinch weld flange forming the vehicle opening. Alternatively, or in addition, a bead of adhesive is often applied to bond the glass panel and gasket directly to the pinch weld flange. A decorative bezel may be moulded with the gasket to conceal space between the vehicle and the window assembly. A disadvantage with moulding gaskets directly onto the glass panel is the not infrequent breakage of the glass panel during the moulding process. Glass panels are not perfectly uniform and are occasionally crushed when the moulding tool is closed about the panel.

New styling requirements are demanding flush mounted glass panels having an exposed edge. One flush mounted vehicle panel assembly on the market has extruded gaskets deposited directly on one surface of a glass sheet. Often the extrusion includes two adhesive beads of polyurethene compounds, one deposited by the panel assembly manufacturer and the other applied by the vehicle assembler. Disadvantages associated with extruded gaskets include long cure times for the first bead, adding cycle time to manufacturing, and constant cross-section profiles. In addition to being limited to uniform cross-section profiles, the gasket material used in forming extruded gaskets is typically not UV stable by itself and can degrade over time. Moreover, the extrusion does not easily adapt itself to receive mounting studs or clips. The extrusion compound is expensive and requires special storage and handling once formed and cannot be fully completed without creating a seam or gap in the gasket layout.

Another window assembly intended for use in flush mounted applications had a gasket moulded directly to a single surface in a moulding machine using reaction injection moulded (RIM) urethane. EP-A-0371810 discloses a method of making a window for an automobile. An edge of a window plate is arranged in a mould that defines the profile of a frame body. The frame body comprises a foamed inner core and a non-foamed outer skin.

Although this technique offers some variable cross-sections, the presence of the glass and tooling limitations prevent or preclude gaskets having undercuts or lips. Other disadvantages include instability when subjected to prolonged exposures of ultraviolet light, long cycle times in forming, and increased material costs compared with other materials such as PVC. In addition, tensile or shear forces applied between the glass and gasket result in failure of the adhesive seal of the gasket with the panel as opposed to the desired loss of cohesion in the gasket itself.

None of the prior panel assemblies or methods are sufficiently versatile in providing flush mounted panel gaskets having unique cross-sectional profiles, with or without attaching or otherwise capturing fasteners. Moreover, none of the prior methods or panel assemblies can provide flush mounted panel gaskets having cross-sectional profiles which are variable along the panel assembly and satisfy complex sealing requirements.

The invention is characterised in that the gasket is formed separately from the panel; at least a portion of the gasket has a positive relief with respect to the fixture; the said surface of the panel has a first layer adapted to engage the gasket, including an adhesion-promoting primer composition; and the gasket and the surface are bonded by pressing the panel and the gasket into intimate contact to form the panel assembly.

Suitably the method further comprises heating (e.g. the portion of) the panel after priming (to promote adhesion). Advantageously the method further comprises heating the gasket prior to contact with (e.g. location on) the panel.

Preferred primers are heat activatable. Suitable primers will thus usually comprise one or more solvents and an epoxy resin system. Preferred primers may comprise methylethylketone, toluene, butylalcohol together with the epoxy resin system.

The primer may be provided with an adhesion promoter. This may comprise a polysiloxane composition. Preferred promoters include compositions comprising methylethylketone, toluene and 3-methoxyethanol as well as the polysiloxane component.

Suitably the heating (of the contact boundary between the panel and gasket) comprises generating infra red energy and directing this energy through the panel. Preferably directing the infra red energy includes focusing a controlled, infra red beam of radiation into the panel, such as from a side opposite that receiving the gasket.

The method may further comprise monitoring the amount of infra red energy being absorbed by the contact boundary and controlling the power of infra red energy to maximise heating efficiency at the boundary.

Forcing the panel into contact with the gasket may be by pulling the panel by a vacuum and/or pushing or urging the panel towards or against the gasket.

Suitably directing the infra red energy includes selecting an optimum frequency of infra red radiation adapted to be transmitted through the panel, generally without significant attenuation from a side opposite that receiving the gasket.

Supporting the preformed gasket may be by locating the preformed gasket in a fixture, such as placing the gasket in a predetermined pattern defined within the fixture. The fixture will suitably hold and/or position the gasket; this may be important if the gasket is to be formed into a closed loop.

The method may further comprise cutting and trimming a gasket end to form a continuous closed-loop prior to contact with the panel (e.g. locating prepared panel thereon).

If one forces the panel into contact with the gasket this can be done by drawing the panel toward the gasket under a vacuum. For example, one can attach at least one suction cup to the panel to pull the panel against the gasket and/or mechanically press the panel against the gasket from a side opposite thereto.

A preferred method involves heating the contact boundary by irradiating the panel with infra red radiation, such as focusing radiation on the contact boundary from a side of the panel opposite the gasket.

Heating the contact boundary may comprise directing infra red energy onto the contact boundary or by using convection heating, conduction heating, induction heating, resistive heating and/or directing microwave energy into the boundary.

The method may further comprise moulding the gasket into the predetermined pattern. One may further extrude the gasket prior to supporting the gasket in a pattern.

Suitably the moulding comprises injection moulding (of the gasket), pour moulding, blow moulding, casting and/or reaction injection moulding.

The first aspect of the invention additionally encompasses a method of manufacturing a panel assembly, the method comprising:
locating a preformed gasket in a retaining fixture, suitably at least a portion of the gasket having a positive relief with respect to the upper surface of the fixture;
providing (or preparing) at least one surface of the panel which has a frit layer adapted to engage the gasket;
priming the surface with an adhesion promoting primer composition; and
bonding the gasket to the prepared surface of the panel by contacting (pressing) the panel and gasket together, e.g. into intimate contact with each other, to thereby form the panel assembly.

The method further includes heating the frit layer to a temperature of at least 37.8°C (100°F). Preferably one may heat the preformed gasket (e.g. to promote bonding to the panel) and/or heating the frit layer prior to bonding. For example, one can heat the frit layer during bonding and/or heat the frit layer after bonding.

The method preferably includes heating the preformed gasket to a temperature sufficient to make the gasket flexible for location in the fixture.

One can heat the frit layer from a side of the panel containing the frit layer or from a side of the panel opposite the frit layer.

The method may further include heating the frit layer substantially simultaneously with pressing the panel into contact with the gasket and/or heating the frit layer after pressing the panel into contact with the gasket.

Heating the frit layer may include irradiating the frit layer with infra red radiation or by using convection heating, conduction heating, induction heating, using microwave energy and/or using resistive heating.

A second aspect of the invention relates to a panel assembly according to claim 6.

Advantageously:
the panel is glass;
the gasket is formed from a polymeric material, and suitably bonded only to a single surface of the panel;
the single panel surface includes a ceramic frit layer; and/or
there is an adhesion promoting primer coating on the frit layer between the first and second securing flanges and the frit layer.

Thus the means for adhering the gasket to the panel can include a heat or pressure or chemically activated (or activatable) primer.

This aspect also encompasses a product, e.g. a panel assembly, manufactured by the method of the first aspect.

Preferably the gasket comprises:
a gas filled body; and
at least one securing flange extending from a tubular body to define a bonding surface engageable with at least one surface. The gas filled body may be disposed outboard of a peripheral edge of the panel.

The gasket may have a lip seal extending from the gasket beyond a peripheral edge of the panel.

Thus the second aspect particularly relates to a panel assembly suitable for use in a vehicle opening, the assembly comprising:
a sheet-like panel of size and geometry adapted to fit in a vehicle opening, the panel having first and second surfaces terminating in a common peripheral edge;
heat, pressure or chemically activatable bonding means present on a portion of the first panel surface in proximity to the peripheral edge; and
a (polymeric) gasket formed separately from the sheet-like panel and having a binding surface engageable with the activated bonding means on (a portion of ) the first panel surface.

Preferably the heat activatable bonding means is a primer composition, e.g. on (a portion of) the first panel surface. The gasket may comprise polyvinyl chloride and/or the sheet-like panel is a window.

A particularly preferred method developed in line with the present invention comprises:
(a) optionally cleaning a surface of a panel, suitably with a solvent;
(b) optionally heating the panel to drive off any remaining carrier or solvent;
(c) forming a gasket, suitably by a moulding process, such as by injection moulding (the gasket preferably comprises PVC, and is suitably heated to a temperature at up to 196°C) and removing the gasket from the mould;
(d) applying a primer to a surface of the panel or the gasket, such as by using a brush, pad, roller or spray (the primer may be directly applied to the panel or may be applied to a layer or coating already present on for example the panel, which may be a (e.g. ceramic) frit. The primer preferably comprises a heat, pressure and/or chemically activatable material;
(e) optionally removing any mould releasing agent on the gasket that may be employed during the moulding process;
(f) contacting the primer present on the panel with the gasket to thereby bond the gasket and panel together, the gasket being retained by a support and/or fixture.

Preferably the primer is heated, or at least has its temperature raised. Suitably, the gasket will be at a temperature of 37°C to 149°C when in contact with the primer.

Contact between the panel and gasket, via the primer, suitably takes from 3 to 30 seconds.

As has been mentioned, the primer is preferably heated. Its temperature can be increased by heating the panel prior to the primer contacting the gasket. Any suitable form of heating can be employed, such as by conduction, induction, convection and radiation. The latter is preferred, suitably electromagnetic radiation, such as infra red or microwave radiation. This is preferably for from 3 to 30 seconds, up to a temperature of approximately 150°C. Heating is suitably from the side opposite from the gasket.

Pressure may optionally be applied to force the gasket and panel close together. Although the panel's own weight may be sufficient, other means to apply pressure may be employed, such as negative pressure (by using a vacuum) or by a mechanical pressure.

It will of course be realised that more than one gasket can be used. The process is equally applicable to one or more gaskets, although naturally it is preferred that any if not all of the gaskets are subjected to the same stages at the same time. Clearly it will be preferable to prime respective surfaces of the panel for each gasket.

Fastening means may be included in the gasket. The or each gasket may thus be provided with attachment means for securing it to an opening such as in a vehicle, and so in preferred embodiments the gasket is provided with attachment means such as in the form of one or more male members (such as a screw or stud) which may cooperate with an appropriately positioned female member (e.g. an aperture) at or near the opening (such as in the vehicle).

The method of this invention finds use in the manufacture of a panel assembly suitable for use in vehicles. More particularly, the method can be used to manufacture window panel assemblies for vehicles where the glass panel can be flush-mounted within the vehicle opening and sealed therein by one or more gaskets or grommets bonded to a single surface of the panel. Moreover, the method includes adhering a polymeric gasket or grommet to a single surface of a vehicle panel so that the panel may be mounted flush with the vehicle exterior. The method includes preparing a surface area of the panel adapted to receive the gasket using a material adapted to bond the panel with the gasket. The desired gasket profile is formed from a polymeric material separately from the glass panel. The desired gasket is then located with respect to the panel and heat and pressure are applied to the contact boundary to establish the bond.

In one embodiment of the method, the panel and gasket are preheated. Heat can be applied to the panel to improve adhesion to the gasket. The gasket may be heated to make it more pliable and promote adhesion. The preheated panel is positioned on the gasket and pressed into intimate contact.

In another method of manufacturing the panel assembly, especially adapted for use in vehicle windows, the method includes priming a surface of the panel adapted to receive the gasket using a material adapted to prepare the panel surface to bond with the gasket and allowed to dry. Drying time may be decreased by preheating the panel to drive off any carriers/solvents in the primer coating and to elevate the energy level of the bonding agents. Preheating of the panel may be reduced or eliminated by applying the primer to the gasket surface. Moreover, if preheating is desired, heat may be applied to the panel. Additional heat may also be applied to the interface between the panel and gasket when the panel is forced against the gasket. This additional heat is preferably directed onto a frit layer provided between the panel and the gasket to further the bonding process.

The panel assembly of the invention can thus be formed according to this method and may have a (e.g. sheet-like) panel of predetermined size and geometry. The panel nay have two surfaces, terminating in a peripheral edge, one of which may have a cosmetic (e.g. ceramic) frit coating or otherwise opaque layer to conceal the vehicle opening and the manner in which it is attached to the vehicle. A primer coating can be applied to the panel surface adapted to receive the gasket and is usually applied to a restricted area in proximity to the peripheral edge. The gasket can be formed separately from the panel and bonded to the primed surface by the application of heat and pressure. A securing flange or surface of the gasket may define a bonding surface adapted to engage the panel and which may retain mounting hardware to retain the panel in the vehicle. The resulting product made according to the method can be a sheet-like panel having a gasket securely attached to at least a portion of at least one surface of the panel and installed as a unit securely within the opening from the exterior.

The panel assemblies and the method of manufacturing them have advantages over the prior art in that the gasket may be mass produced separate from the panel using conventional extrusion or moulding techniques. Moreover, the assembly may be accomplished without complex machines to fix the gasket to the panel. Moreover, because bonding the gasket to the panel can require lower pressures than direct moulding techniques, fewer panels may be broken during the manufacturing process and less waste results. Yet another advantage of the panel assembly and the method of making it can be the ability to install the panel assembly in existing vehicles with specific gasket designs for sealing the panel assembly in the vehicle.

The invention extends to products (e.g. panel assemblies) made according to the method of the first aspect of the invention.

A third aspect of the present invention relates to a method of fitting a panel assembly into an opening, suitably in a vehicle, the method comprising securing or fastening (e.g. by cooperating male and/or female fastening or attachment means and/or by adhesion) a panel assembly according to a second aspect of the invention and/or manufactured by a method according to the first aspect of the invention to support means whereby the panel extends into at least part of the opening.

A fourth aspect of the invention encompasses a vehicle having a panel assembly of the second aspect or fitted in an opening according to the third aspect of the invention or manufactured by a method of the first aspect.

In this specification "vehicle" includes, but is not limited to motor vehicles such as cars and motor cycles, commercial vehicles, such as vans, lorries, HGVs, earth moving machinery and agricultural machinery (such as tractors).

Preferred features and characteristics of one aspect of the invention are as for another *mutatis mutandis.*

These and other objects, advantages, purposes and features of the invention will become more apparent from a more detailed description of the invention with reference to the accompanying drawings, which are exemplary and not to be construed as being limiting, and in which:
Fig. 1 is a fragmentary plan view of a panel assembly according to the invention;
Figs. 2a and 2b are fragmentary, cross-section taken along line II-II of Fig. 1;
Figs. 3a-3l are sections illustrating a first embodiment of a method of manufacturing a panel assembly according to the invention;
Figs. 4a-4g are front views of a machine that can be used to carry out a method of the invention;
Figs. 5 and 6 are two plan views of some of the machine components shown in Fig. 4;
Fig. 7 illustrates an alternative technique that can be used in the method of this invention;
Figs. 8 and 9 schematic diagrams illustrating heating devices which may be used in a method of the invention; and
Figs. 10 and 11 are sections of additional embodiments of panel assemblies made in accordance with the method.

In the following description, reference is made to "gaskets" and "grommets" (which are used inter-changeably) and encompass strip, elongate or string-like seals, as well as (complete) loop seals, extruded and moulded, and adapted to be placed between two or more surfaces. Although the following description is made primarily with reference to gaskets made from extruded materials, this is not to be construed as a limitation but merely by way of illustration. The method and panel assembly produced by the method may also be accomplished using gaskets preformed using injection moulding techniques, of which specific examples are described in detail below.

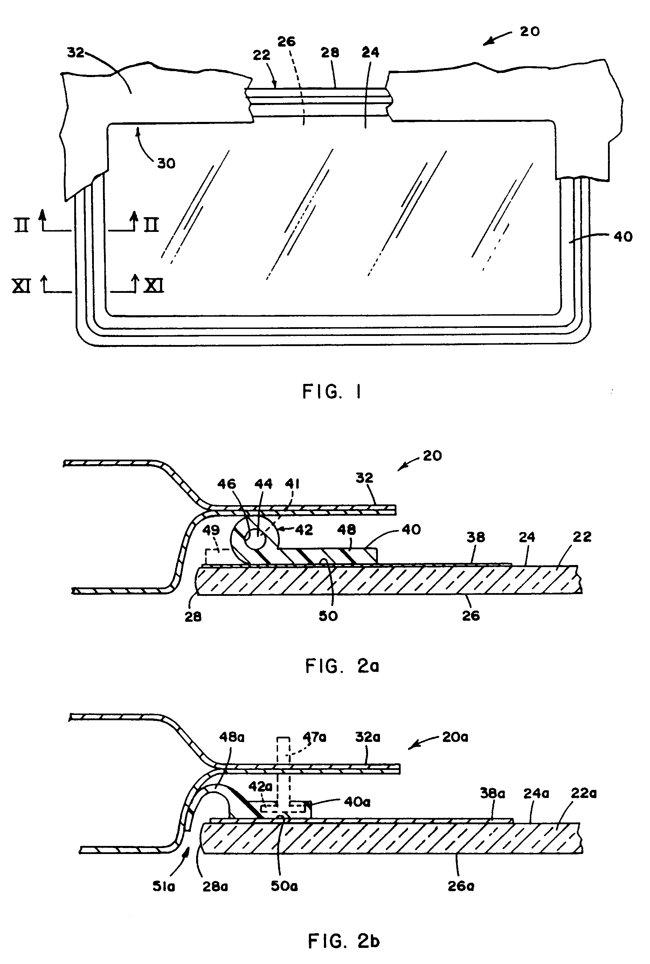

Referring now to the drawing figures in greater detail, Figs. 1 and 2a illustrate a first embodiment 20 of a (window) panel assembly 20 of the present invention specifically adapted for use in a vehicle as a window and has a panel (e.g a sheet of glass) 22 which may be tempered, laminated, or otherwise strengthened using conventional techniques. The panel (or sheet) 22 has two substantially parallel sides or faces 24, 26 which terminate in a peripheral edge 28. Although a transparent sheet of glass is preferred, other panel materials such as opaque tinted glass, or transparent, tinted, or opaque plastic materials, or multi-composite laminates such as glass and plastics materials could also be used. Panel assembly 20 is of a particular size and geometry adapted to fit within and conform to a window opening 30 formed by sheet metal pinch flange 32 of the vehicle body.

Fixed to inner surface 24, and extending along and around at least a portion of sheet 22 in proximity to the peripheral edge 28, is a flexible, resilient gasket (or grommet) 40 intended to provide a weather seal with a portion of a vehicle body when assembly 20 is installed. In Fig. 1, gasket 40 extends around the entire perimeter of surface 24 and is disposed between the sheet metal pinch flange 32 and the sheet 22. The gasket 40 may be fixed to a ceramic frit layer 38 (Fig. 2a) applied and bonded to a restricted area on surface 24 in proximity to the peripheral edge 28 to cosmetically conceal the gasket 40 and pinch weld flange 32. Alternatively, the gasket 40 may be fixed directly to surface 24 of sheet 22 if frit layer 38 is not used.

The gasket 40 is preferably resistant to ultraviolet radiation and preformed using conventional extruding or moulding techniques from an elastomeric material, such as polyvinyl chloride (PVC) or RIM urethane(s). Other materials may also be used to form the gasket 40 so long as the material is compliant and compatible with any adhesives used to bond the panel 22 in the opening. In one embodiment, the gasket 40 may be extruded as a substantially continuous, elongate, strip, string or strand. For example, one possible extruded cross-section of gasket 40 as seen in Fig. 2a, has a substantially tubular body 42 having a concentric inner chamber 44 formed by inner wall 46. At least one securing flange 48 extends from the tubular body 42 so that a bonding surface 50 is tangential to the exterior surface of the tubular body 42. An optional second securing flange 49 (shown in broken lines) may extend from the opposite side of the tubular body 42 to be co-planar with securing flange 48. The bonding surface of flange 49 may also be tangential to tubular body 42. The width and thicknesses of securing flanges 48, 49 may vary depending upon the desired bonding area and particular application. It is thought that a width of several centimetres will be suitable for most vehicular window applications, while the size and thickness of tubular body 42 will vary depending upon the sealing force necessary in the vehicle after installation along a given portion of the gasket.

One of the many possible sections of moulded gasket 40a is shown in Fig. 2b, and includes a generally rectangular body 42a which has one surface 50a adapted to be adhered to surface 24a of sheet 22a having frit layer 38a. If desired, the rectangular body 42a may be moulded about and retain mounting hardware 47a such as locating or mounting studs, clips, and the like, and adapted to retain panel assembly 20a in the vehicle opening. The gasket 40a has a lip 48a which extends from the rectangular body 42a and bridges or otherwise closes the gap 51a between panel peripheral edge 28a and the vehicle body. As in the embodiment shown in Fig. 2a the width of rectangular body 42a and the thickness of lip 48a may vary depending upon the desired bonding area and particular application. The gasket 40a may be moulded using conventional moulding techniques such as injection moulding, blow moulding, pour moulding, and the like. Advantages provided by moulded gaskets may include the forming of a continuous gasket with variable section suited for specific applications and the encapsulation of mounting studs, clips, and the like, to retain the panel in the opening.

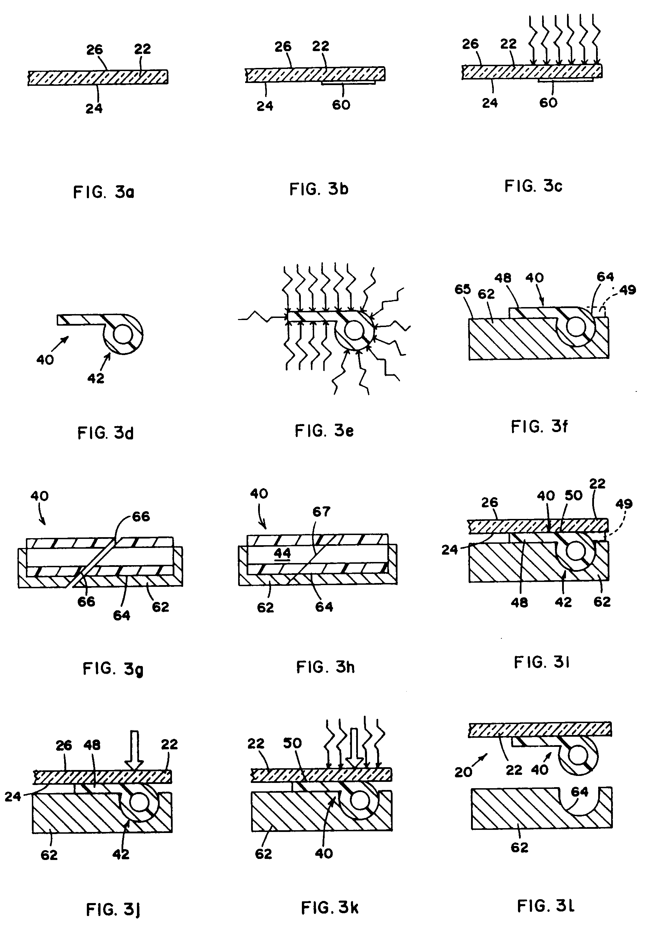

Referring now to Figs. 3a-3l, one method of making a panel assembly 20 comprises providing a panel 22 (such as previously cut and shaped transparent sheet-like panel) having a desired size and geometry adapted to fit within vehicle opening 30 (Fig. 1). The sheet 22 may have one or more peripheral areas of surfaces 24, 26 cleaned with a solvent such as methylethylketone to remove oils, dirt or other debris which may interfere with the bonding process. After the optional cleaning, at least one coating of primer material 60 is applied to one or both of surfaces 24 or 26, or to frit layer 38 (Fig. 2a), to prepare the panel or frit surface to receive gasket 40. The primer is selected to enhance the adhesion/bond between gasket 40 and sheet surface areas 24, 26 or frit layer 38 and may be any of several varieties depending on the material of gasket 40 and sheet 22, such as heat and/or pressure activated compositions. The primer may be applied by brush, pad, roller or spray and allowed to wholly or partially dry to obtain a substantially uniform, even coating to the sheet surface. For panels having the ceramic frit layer, the primer may be applied directly thereto to achieve substantially the same results for preparing the surface for bonding. If the gasket 40 is made from a polyvinyl chloride material, a preferred primer that can be used is sold under the designation A-1100-B (comprising methylethylketone, toluene, butylalcohol and an epoxy resin system) combined with an adhesion promoter designated A-1167-B (comprising methylethylketone, toluene, 3-methoxyethanol and a polysiloxane), both produced by B. F. Goodrich Co. of Akron, Ohio.

Generally simultaneously with the preparation of sheet 22, gasket 40 (Fig. 3f) is loaded in a fixture 62 having a channel 64 corresponding in shape to the exterior surface of body 42 and adapted to retain gasket 40. The bonding surfaces of gasket 40 adapted to be adhered to panel 22 extend above upper surface 65 of fixture 62 in order to make contact with sheet 22. Channel 64 is in a pattern corresponding to the pattern gasket 40 to be attached to sheet 22. The gasket pattern may be a complete or continuous loop outlining the sheet periphery, a straight or curved shape partially outlining the sheet periphery, or numerous other shapes or patterns adapted to match the requirements for the particular vehicle window opening.

If the pattern of gasket 40 is such that it forms a loop, and the gasket material is in the form of an extruded strip, ends 66 may be trimmed at matching angles (Fig. 3g) using a hot wire or similar technique. After the trimming of the gasket ends, the hot ends may be joined to form seam 67 (Fig. 3h). On the other hand, if the gasket pattern is other than a continuous loop, the extruded strip need only be laid in the fixture pattern, terminating the ends in an appropriate manner. In the case of the tubular gasket shown in Fig. 2a, the joining of gasket ends 66 may hermetically seal inner chamber 44, trapping a volume of gas therein, thus rendering gasket 40 resilient. If the ends are not joined, each end 66 may be pinched closed in order to achieve the same results. In another embodiment, the gasket may be extruded and preformed to a specific shape by a secondary operation having the ends joined prior to being located in fixture 65. In either case, extruded gasket 40 may include one or more perforations or vents (not shown) extending through body 42 and joining chamber 44, thus making gasket 40 more compliant. The gasket 40, in such a case, retains its tubular shape based upon the inherent memory of the material from which it is made. Moreover, although gasket 40 is shown to have securing flanges 48, 49 and body 42 having substantially the same thickness, it may be made such that walls of body 42 have a different or gradational thickness about its circumference, or that securing flanges 48, 49 are of different thickness or width. In addition, gasket 40 may include locating pins, mounting studs of clips, or other hardware accessories fixed therein, depending upon the desired application.

If the gasket 40 is formed from moulded material, some of the same principles described above may apply, depending upon the desired shape. For example, if gasket 40 is moulded in a strip and is to be joined to form a loop, the ends may be joined, as described above. However, it is preferred that gasket 40 be moulded in the desired shape to be attached to the panel. In this manner, the extra step of mending or welding together of the ends of the gasket material to complete the loop is removed. If a moulded gasket 40 is to be placed around only a portion of panel 22, it may be moulded to that particular shape, or a section of a looped gasket may be removed to obtain the desired configuration. The benefits of moulding the gasket 40 include encapsulation of mounting hardware such as location studs, mounting studs or clips, and the like, within the gasket material. Another advantage is that the corners and bends are preshaped and need little if any stretching to fit in fixture 62.

After forming the gasket 40 using one of the two extrusion methods or by moulding, and locating the gasket 40 in fixture 62 so as to expose the bonding surface 50, gasket 40 is ready to be adhered to sheet 22. With reference again to the example of extruded gasket 40, shown in Figs. 3a-3l, prepared sheet 22 is located on gasket 40 such that primed surface 24 engages bonding surface(s) 50 of securing flange 48, 49 and tubular body 42 (Fig. 3i). Sheet 22 is properly located with gasket 40 by sheet locating pins 82 (Fig. 5) extending substantially perpendicular from fixture 62. The sheet is then pressed into intimate contact with bonding surface 50 (Fig. 3j). Locating pins 82 are situated to engage peripheral edge 28 of sheet 22 so that sheet 22 fit therein in only one particular configuration. The force used to press sheet 22 against gasket 40 may range between 0.5 and 6.67 Atm [7 and 100 pounds per square inch (psi)], depending upon the width of bonding surface 50, the length of gasket 40 to be fixed to sheet 22, the temperature of gasket 40 and/or sheet 22, the nature of the adhesive and gasket material, and the geometry of sheet 22. For the latter characteristics, the amount of force may vary along sheet 22 for complex sheet geometries.

Generally simultaneously with the application of the pressure, heat energy is applied to the interface between sheet 22 and gasket 40 by heating frit layer 38 (Fig. 2a) between sheet 22 and bonding surface 50 of gasket 40 to between 37.8° and 176.7°C (100° and 350°F), see Fig. 3k. It is preferred that both pressure and heat be applied for between three and thirty seconds in order that heating of frit layer 38 activates the primer 60 to bond gasket surface 50 with frit layer 38 and/or panel 22, providing a secure adhesion of gasket 40 to sheet 22. Following the application of pressure and heat for the prescribed period of time, the finished panel assembly 20 is allowed to cool before being removed from the fixture 62 (Fig. 3l).

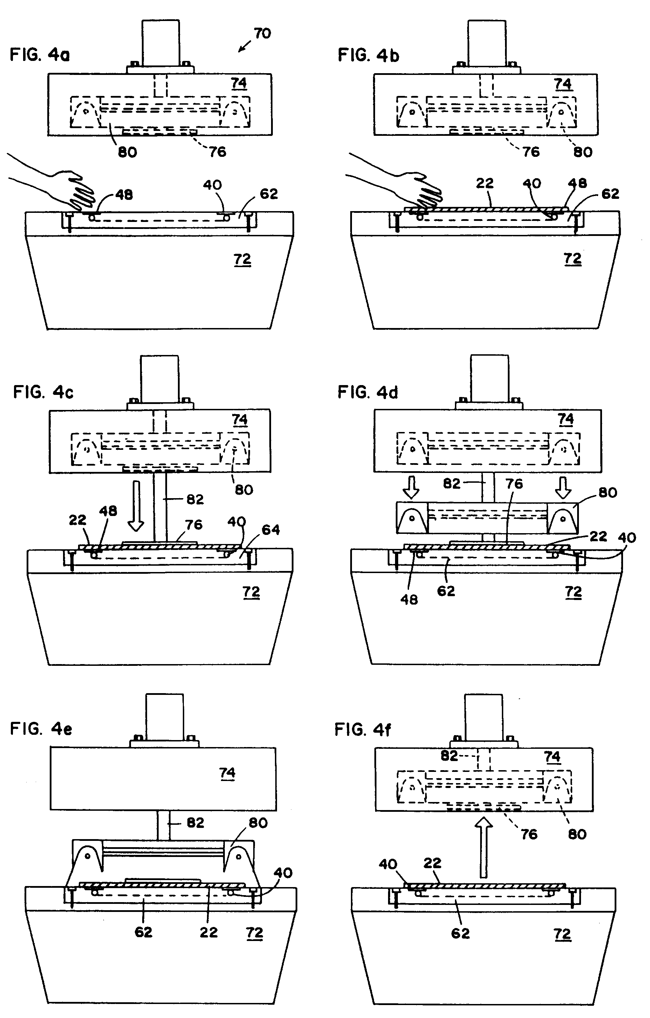

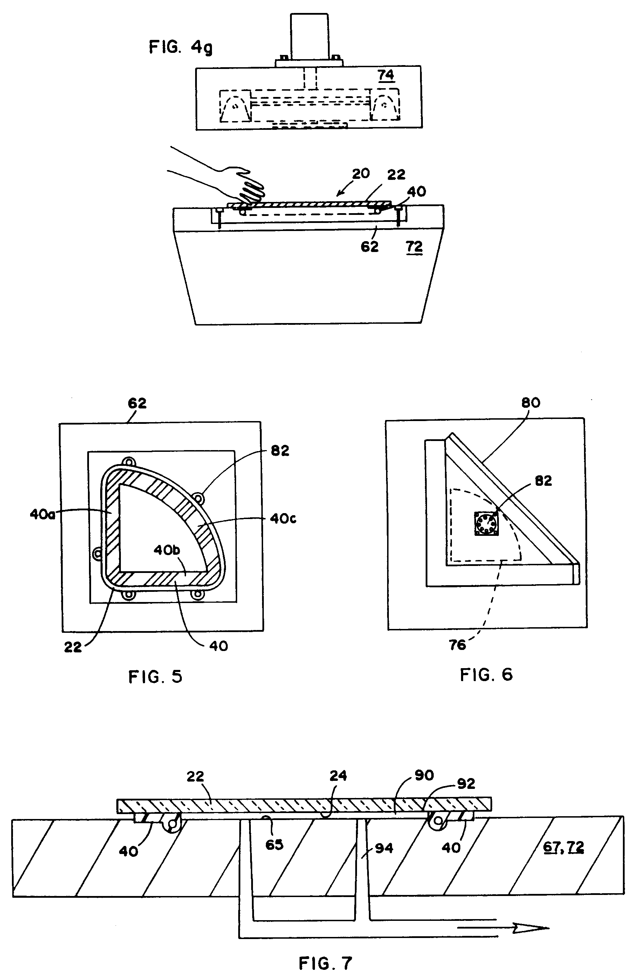

This above method may be carried out with a fixture 62 retained within an apparatus 70, such as shown in Figs. 4a-4g. Device 70 may include a platen 72, spaced directly opposite an assembly 74, housing an extensible foot 76 and a heat energy source 80. Both foot 76 and source 80 may be moved with respect to platen 72. Fixture 62 and platen 72 may include a heat source (not shown) to preheat gasket 40 to at least 37.8°C (100°F) once loaded therein. Several techniques may be used to hold the gasket 40 in fixture 62, such as undercuts in the gasket channel and/or projections defined along the flexible, resilient gasket which are then adapted to snap into corresponding recesses in the fixture. Alternatively, a vacuum may be used to retain the gasket. It should be understood that platen 72 may be adapted to receive many different fixtures 62, each having one or more channel patterns to retain gasket 40. Each fixture may be readily removed and replaced with another, depending upon the desired application. For example, as seen in Fig. 5, fixture 62 retains gasket 40 wherein two legs 40a and 40b form a right angle. A third leg 40c interconnects legs 40a, 40b, forming an arcuate hypotenuse.

With sheet 22 located on gasket 40 it is urged against securing flange 48. This may be accomplished mechanically by a foot 76 disposed at the end of a ram 82 integral with assembly 74 (Fig. 4c). Foot 76 is adapted to engage sheet 22, having a plan form to fit within locator pins 82 and inboard of the gasket outline. It is preferred that foot 76 does not conceal gasket 40 when engaging sheet 22, but extend only to the inside edge of the outline to apply a pressure between 0.5 and 6.67 Atm (7 and 100 psi) opposite gasket 40.

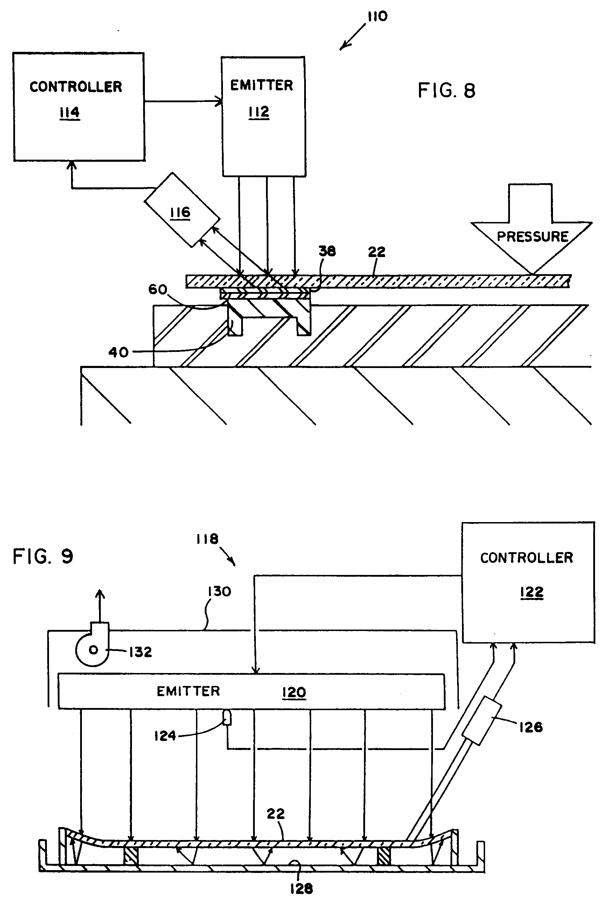

Generally simultaneously with the extension of foot 76, heat energy source 80 is positioned by ram 82 (Fig. 4d) to a predetermined distance away from sheet 22. Source 80 may be moved using one or more rams similar to 82, or the like. It is preferred that source 80 be a controlled focused source of radiation (CFIR) 110, such as shown in Fig. 8. Controlled focused infrared source 110 includes one or more infra-red emitter assemblies 112 such as Model 5305-104 produced by Radiant Energy Research, Inc. of Minneapolis, Minnesota. Emitter 112 may be positioned with respect to sheet 22 in a pattern conforming to that region of sheet 22 adapted to receive gasket 40 (Fig. 6). Alternatively, a single infrared emitter assembly 112 may be moved above sheet 22 in a pattern conforming to that of the gasket layout by a guided robotic arm or other mechanisms such as a cam-operated guide. A computer or process controller 114 preferably causes infra red emitter assembly 112 to emit infrared energy having a wavelength between 7.0 x 103 and 4.0 x 104 Angstroms onto sheet 22 from a side opposite that containing primer 60 and frit layer 38 to heat the interface or frit layer 38 between the sheet and the gasket. A spectrophotometer 116, disposed above sheet 22 and coupled to computer/process controller 114, detects the energy reflected and radiated from sheet 22. Based upon the feedback from spectrophotometer 116, controller 114 adjusts the power of infrared energy emitted by assembly 112 such that most of the energy is absorbed by frit layer 38 in the area of primer 60 to raise the temperature to the desired level. Although CFIR 110 has been described for use in both preheating and heating after location with the gasket, it is contemplated that CFIR 110 will be most effective to heat frit layer 38 after panel 22 is located with respect to gasket 40.

In an alternative embodiment, a controlled area source 118 of infra red radiation (CAIR, Fig. 9) is located at a predetermined distance above sheet 22. Controlled area infra red source 118 may include one or more infra red emitters 120 such as Model FB122425B3 made by Cassso-Solar Corp. of Pomona, New York. The energy of radiation generated by emitter 120, having a wavelength between the range of 2.7 x 104 and 4.0 x 104 Angstroms, is controlled by a computer or process controller 122 based upon input from a thermocouple 124 attached to emitter 120, and a spectrophotometer 126 angularly disposed with respect to sheet 22. A reflector 128 may be disposed beneath sheet 22 to redirect energy back into sheet 22. The CAIR is better adapted to simultaneously heat an exposed area on sheet and may be used to preheat the panel, if desired. Contemplated in both of the heating options described above, but shown only in Fig. 9, is a plenum 130 and exhaust fan 132, cooperating to vent fumes driven off during the heating process.

Since the radiation produced by emitters 110, 118 may be introduced into sheet 22 from a side opposite that containing primer coating 60, it is preferred that sheet 22 has a high transmissivity to the wavelength of radiation selected. Emitters 110, 118 both produce infra red radiation having a wavelength greater than 7.0 x 103 Angstroms. The transmissivity of the radiation is greatly affected by the particular characteristics of sheet 22. For example, optically clear glass panels have a higher transmissivity (ratio of radiation transmitted through the panel to that of radiation incident upon the panel) for infra red radiation than clear non-glass panels because a certain amount of the radiation is absorbed by the atomic lattice comprising the non-glass sheet. Tinted or opaque panels may have a lower transmissivity since the pigments or colouration within the material may absorb a portion of the radiation. For materials having lower transmissivities, it is preferred to select wavelengths of radiation which promulgate better through the tinted or opaque materials, yet are absorbed at the contact boundary or frit layer between sheet 22 and primer coating 60, such as in the range of 5.0 x 103 and 4.0 x 104 Angstroms. In the preferred embodiment of this invention, sheets 22 are optically clear glass sheets and may be single sheet or laminated sheets, depending on the desired function in the vehicle.

In order to reduce problems associated with heating and cooling large expanses of glass or plastic panels, it is preferred that each of the above radiation sources direct its energy to a restricted portion of panel or sheet 22. For example, since it is desired to heat only that portion of sheet 22 adapted to engage gasket 40, CFIR 110 or CAIR 118 may be adapted so that the radiation is applied only to the peripheral margin or other location receiving the gasket. Alternatively, a single source may be moved around sheet 22 by a guided robotic arm, as previously mentioned. Moreover, one or more emitters may be recessed within a tool patterned to coincide with the area of the panel to be heated. As an alternative to energy sources 110 and 118 described, sheet 22, frit layer 38 and primer 60 may be heated using convection, conduction, induction, radiation, resistive and microwave energy heat sources.

As an alternative in the method shown in Fig. 7, the forcing of sheet 22 against gasket 40 may be accomplished by creating a negative pressure or vacuum within a chamber 90 formed by the inside perimeter 92 of closed-loop gasket 40, upper surface 65 of fixture 62, and surface 24 of sheet 22. Suction lines, such as 94 extending through platen 72 and fixture 62, are coupled to a vacuum source (not shown) adapted to create a negative pressure ranging between one-half and five atmospheres (-7 and -70 psi). The vacuum created in chamber 90 draws sheet 22 toward fixture 62 and against gasket 40. Another method (better adapted for use with gasket patterns which are not closed-loops) involves creating a vacuum between suction cups (not shown) at the ends of vacuum lines 94 within cavity 90.

Although the above description has been made with reference to sheet 22 being moved with respect to gasket 40, it should be understood that gasket 40 may be moved (e.g. supported in a fixture) with respect to sheet 22 in the bonding process. Moreover, the amount of pressure required to optimize the contact between panel 22 and gasket 40 is dependent upon several factors, including the total surface area to be bonded, the temperature, size and geometric shape of sheet 22, and the exact nature and temperature of the adhesive and the material forming gasket 40. For example, for a substantially flat glass sheet 4 millimetres thick, a surface area of approximately 1 square metre, and a PVC gasket having a 2.5 centimetre wide bonding surface extending substantially around the entire perimeter of the sheet in a closed loop, the pressure required to effect a secure bond is between about 0.5 and 3 atmospheres (7 to 45 psi).

In addition to the steps outlined above, it is preferred to preheat sheet 22 and gasket 40 before bonding the two together. In one embodiment, sheet 22 is primed in the desired areas and preheated to drive off any remaining carrier/solvents and raise the temperature of surface 24 and frit layer 38. A preferred method of heating the sheet 22 is by irradiating it with infra red radiation produced by CAIR 118, described above and shown in Fig. 9. Once sheet 22 is preheated such as to from 37.8 to 176.7°C (100° F to 350° F), gasket 40 is bonded to sheet 22 by reheating the frit layer 38 between sheet 22 and gasket 40 to between 37.8 to 176.7°C (100° and 350° F) to activate primer 60. Preferably, heating the contact surface between sheet 22 and gasket 40 is accomplished by CFIR source 110 (Fig. 8) focused on frit layer 38 to heat bonding surface 50 and primer 60 from a side of sheet 22 opposite that of gasket 40, as described above. Sheet 22 is substantially transparent to the infra red radiation (less than 4.0 x 104 Angstroms) passing therethrough and impinging upon the contact surface between gasket 40 and sheet 22. Pressure is also applied, either prior to or simultaneously with the heating, in order to maximize the surface area of each component in contact with the other. After approximately three to thirty seconds of applying pressure and heat, both are removed and assembly 20 is allowed to cool, curing or hardening the bond between gasket 40 and sheet 22. Once assembly 20 is cooled, it may be moved on in the assembly process as finished goods.

Since the heating sources described with reference to Figs. 8 and 9 are adapted to heat sheet 22 and frit layer 38, gasket 40 is preferred to be heated using a separate heating source. Gasket 40 can also be heated by built-in heaters in the fixture. Gasket 40, made from PVC or similar polymeric material, may be quite stiff before being loaded into fixture 62. In order to make gasket 40 more flexible and promote adhesion, it is preferred that gasket 40 be preheated to raise the temperature level of gasket 40 to approximately 37.8°C (100° F). At that temperature, gasket 40 becomes substantially pliable and may readily be stretched if necessary to make appropriate curves or bends in the gasket layout.

Following the above steps, a substantially flat sheet of glass having a thickness of 4 millimetres, and a flat layer, was primed with A-1100-B and A-1167-B primer mixture. A gasket, such as shown in Fig. 2b, was preformed separate from sheet 22 using injection moulding techniques in a 250 ton press using 200 tons of clamping pressure. The melt temperature of the gasket material was 193°C (380° F) and had a nine second cure time in the mould. While the gasket was being formed, the frit layer on the glass panel was pre-heated to approximately 148.9°C (300° F). After the gasket was formed and had cooled to approximately 37.8°C (100° F) it was removed from the mould and located in a fixture such that the bonding surface was exposed. The preheated panel was then located with respect to the gasket and pressed thereon using 1 Atm (14 psi) of force maintained for approximately seven seconds. Simultaneously with the pressure, the frit layer was heated from a side opposite the gasket to activate the primer. Following the application of heat and pressure, the panel assembly was allowed to sit for less than one minute before being removed from the fixture. Although in each of the embodiments the gasket has been described generally as being made from PVC, other materials may also be used, including reaction injection moulded (RIM) urethane or thermoplastic elastomers such as thermoplastic rubber (TPR), thermoplastic olefin (TPO), and thermoplastic urethane (TPU). The preferred material, PVC, offers several advantages, including ease in handling, is readily available, inexpensive, and recyclable. Moreover, PVC material is substantially resistant to ultraviolet radiation and pliable in a variety of climatic conditions. A preferred PVC material is 48562 obtained from Vista Chemical Co. of Aberdine, Mississippi. Moreover, the gaskets may be mass produced using any one of the above materials separate to the bonding process.

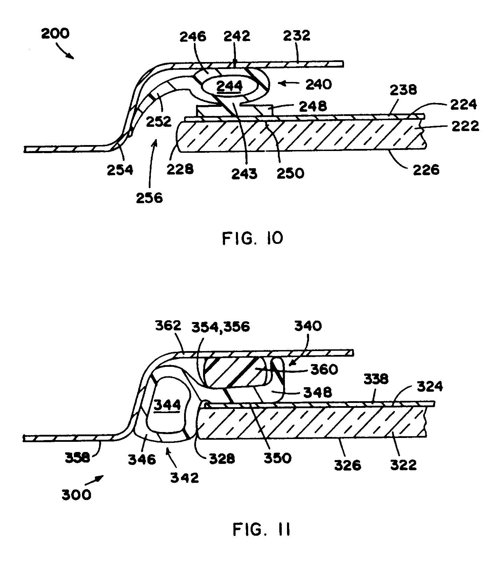

Figs. 10 and 11 generally illustrate two additional embodiments of a panel assembly in accordance with the invention. Fig. 10 is a section of one embodiment of panel assembly 200 as shown in Fig. 1 taken along line XI-XI. Panel assembly 200 includes a panel or sheet 222 which may be tempered, laminated, or otherwise strengthened using conventional principles. Sheet 222 has two opposing surfaces 224, 226 joined at a peripheral edge 228. Surface 224 may include a ceramic or similar material frit layer 238 bonded thereto to conceal the mounting of panel assembly 200 in the opening. Fixed to frit layer 238 and/or surface 224, and extending around at least a portion of sheet 222 near peripheral edge 228 is a flexible, resilient, extruded gasket 240 adapted to locate and seal panel 222 with sheet metal pinch flange 232 forming in the opening. In this embodiment, panel or sheet 222 may be movable with respect to pinch flange 232.

Gasket 240 includes a tubular body 242 having a generally concentric inner chamber 244 formed by wall 246. Tubular body 242 is interconnected by an integral rib or web 243 to a securing flange 248 having a bonding surface 250 adapted to contact and bond with sheet 222 and/or frit layer 238. Also extending from tubular body 242 is a lip 252 adapted to engage the outer surface of sheet metal 254 and drape within opening 256 between sheet metal 254 and peripheral edge 228. This panel assembly 200, satisfying flush-mounted panel requirements for next generation vehicles, preferably has gasket 240 extruded from UV-stable PVC or similar material, as previously described.

Fig. 11 generally illustrates in partial section another embodiment of a fixed panel assembly 300 made in accordance with the above method. Sheet 322, with or without a frit layer as described above, receives an extruded bulb seal 340 adhered to surface 324 near peripheral edge 328. Seal or gasket 340 includes a tubular body or bulb 342 having a gas filled chamber 344 defined by wall 346. Extending from bulb 342 generally normal to wall 346 is a securing flange 348 having a securing surface adapted to contact and be adhered to surface 324. An opposite side 354 of flange 348 includes a channel 356.

Gasket 340 is bonded to surface 324 of panel 322, as described above, with respect to the general method such that bulb 342 is located between peripheral edge 328 and sheet metal 358 on the vehicle exterior. The panel 322 and gasket 340 are bonded in the opening by a bead of adhesive 360 extruded into channel 356 and pressed against pinch flange 362. The resilient nature of bulb 342 seals the gap between the sheet metal and glass with a generally smooth transition, which results in reduced wind noise and dirt infiltration and provides an aesthetically pleasing appearance. Since a portion of gasket 340 is exposed in the panel opening, it is preferred that gasket 340 be made from UV-stable material such as PVC.

The invention has been described with respect to several preferred embodiments and many variations and modifications will become apparent to those skilled in the art. For example, the heat activated primer composition may be substituted by a chemically activated adhesive. This is particularly suitable for panels made from materials other than glass such as acrylic or similar polymeric material. It is, therefore, the intention that the claims be interpreted including all such variations and modifications.

## Claims

1. A method for manufacturing a panel assembly (20), comprising the steps of:
locating a preformed gasket (40) in a retaining fixture (62); and
bonding said gasket to a surface of a panel (22), characterised in that:
the gasket is formed separately from the panel (22);
at least a portion of the gasket has a positive relief with respect to the fixture;
the said surface of the panel has a first layer adapted to engage the gasket, including an adhesion-promoting primer composition (60); and
the gasket and the surface are bonded by pressing the panel and the gasket into intimate contact to form the panel assembly.

2. A method according to claim 1 comprising:
supporting the preformed gasket (40) on a support, such as in a predetermined pattern or position with a bonding surface arranged to face the panel portion;
priming at least one of the panel surface and the bonding surface of the gasket by applying the adhesion promoting priming composition thereto;
optionally locating the prepared panel on the preformed gasket following arrangement of the gasket in the predetermined pattern;
bringing the panel into contact with the gasket; and
heating the contact boundary between the panel and the gasket to bond the gasket to the panel.

3. A method according to claim 1 or 2 further comprising heating the gasket (40) prior to contact with the panel (22).

4. A method according to claim 2 or 3, wherein heating is by directing infra red energy through the panel, such as by focusing a controlled, infra red beam of radiation into the panel from a side opposite to that receiving the gasket.

5. A method according to any preceding claim, wherein pressing or forcing the panel into contact with the gasket comprises urging the panel towards the gasket by a vacuum.

6. A panel assembly (20) comprising:
a panel (22) having first and second surfaces terminating in a peripheral edge (28); and
a gasket,characterised in that:
a primer coating (60) is applied to at least one of the surfaces; and
the gasket (40) is formed separately from the panel and is bonded to the at least one surface of the panel having the primer coating by the application of heat and pressure exerted upon an area of contact between the panel and gasket.

7. A method of fitting a panel assembly (20) into an opening (30), suitably in a vehicle, the method comprising securing or fastening a panel assembly according to claim 6 or manufactured by a method according to any of claims 1 to 5 to support means whereby the panel extends into at least part of the opening.

8. A vehicle with a panel assembly according to claim 6 or fitted into an opening according to claim 7 or manufactured by a method according to any of claims 1 to 5.

## Patentansprüche

1. Verfahren zur Herstellung eines Plattenaufbaues (20), welches folgende Schritte umfaßt: Anordnen einer vorgeformten Dichtung (40) in einer Halterung (62); und Verbinden der Dichtung mit einer Fläche der Platte (22), **dadurch gekennzeichnet**, daß die Dichtung getrennt von der Platte (22) geformt wird; daß mindestens ein Teil der Dichtung mit Bezug zur Halterung ein erhabenes Relief aufweist; daß die Fläche der Platte eine erste Schicht besitzt, die zur Verbindung mit der Dichtung vorbereitet ist, und aus einem die Haftfähigkeit verstärkenden Grundierungsstoff (60) besteht; und daß die Dichtung und die Fläche durch Zusammenpressen der Platte und der Dichtung in engem Kontakt miteinander verbunden werden, um den Plattenaufbau zu bilden.

2. Verfahren nach Anspruch 1, **dadurch gekennzeichnet**, daß dieses folgende Schritte umfaßt: Abstützung der vorgeformten Dichtung (40) auf einer Abstützeinrichtung, z. B. in einer bestimmten Form oder Lage, wobei die Verbindungsfläche so angeordnet ist, daß sie zum Plattenteil weist; Grundierung mindestens einer der Plattenfläche bzw. der Verbindungsfläche der Dichtung durch Aufbringen des die Haftfähigkeit verstärkenden Grundierungsstoffes auf diese; fakultatives Zuordnen der vorbereiteten Platte gegenüber der vorgeformten Dichtung unter Beachtung der Anordnung der Dichtung in der vorbestimmten Form; Inkontaktbringen der Platte mit der Dichtung; und Erwärmen der Kontaktflächen zwischen der Platte und der Dichtung, um die Dichtung mit der Platte zu verbinden.

3. Verfahren nach den Ansprüchen 1 oder 2, **dadurch gekennzeichnet**, daß es weiterhin umfaßt; Erwärmen der Dichtung (40) vor dem Kontakt mit der Platte (22).

4. Verfahren nach den Ansprüchen 2 oder 3, **dadurch gekennzeichnet**, daß das Erwären durch Leiten von Infrarot-Energie durch die Platte erfolgt, z. B. durch Richten eines gesteuerten Infrarotstrahles in die Platte von einer Seite, welche der Seite, die die Dichtung aufnimmt, gegenüberliegt.

5. Verfahren nach mindestens einem der vorhergehenden Ansprüche, **dadurch gekennzeichnet**, daß das Pressen oder Drücken der Platte in Kontakt mit der Dichtung auch das Andrücken der Platte an die Dichtung mittels eines Vakuums umfaßt.

6. Plattenaufbau (20), welcher umfaßt: eine Platte (22), welche erste und zweite Flächen aufweist, die an einer peripheren Kante (28) enden; sowie eine Dichtung, **dadurch gekennzeichnet**, daß eine Grundierungsbeschichtung (60) auf mindestens einer der Flächen aufgebracht ist; und daß die Dichtung (40) getrennt von der Platte geformt wird und mit mindestens einer Fläche der Platte, die die Grundierungsbeschichtung aufweist, durch Anwendung von Wärme und Druck, welche auf den Kontaktbereich zwischen der Platte und der Dichtung einwirken, verbunden ist.

7. Verfahren zur Befestigung eines Plattenaufbaues (20) in einer Öffnung (30), vorzugsweise in einem Fahrzeug, **dadurch gekennzeichnet**, daß dieses umfaßt: Anbringen oder Befestigen eines Plattenaufbaues nach Anspruch 6 oder eines solchen, der durch ein Verfahren nach einem oder mehreren der Ansprüche 1 bis 5 hergestellt wurde, in einer Abstützeinrichtung, wobei sich die Platte zumindest über einen Teil der Öffnung erstreckt.

8. Fahrzeug, **gekennzeichnet durch** einen Plattenaufbau nach Anspruch 6 bzw. einen solchen, der nach Anspruch 7 in einer öffnung befestigt ist, oder einen, welcher nach einem Verfahren nach einem oder mehreren der Ansprüche 1 bis 5 hergestellt wurde.

## Revendications

1. Procédé de fabrication d'un assemblage de panneau (20), comprenant les étapes consistant à :
positionner une garniture préformée (40) dans un dispositif de retenue (62) ; et
fixer ladite garniture à une surface d'un panneau (22), caractérisé en ce que :
la garniture est formée séparément du panneau (22) ;
au moins une partie de la garniture a un relief positif par rapport au dispositif de retenue ;
ladite surface du panneau a une première couche adaptée pour recevoir la garniture, comprenant une composition d'amorçage favorisant l'adhérence (60) ; et
la garniture et la surface sont fixées en amenant par pression le panneau et la garniture en étroit contact pour former l'assemblage de panneau.

2. Procédé selon la revendication 1 comprenant les étapes consistant à :
supporter la garniture préformée (40) sur un support, selon une configuration ou une position prédéterminée, une surface de fixation étant disposée de façon à faire face à la partie de panneau ;
enduire au moins une surface parmi une surface du panneau et la surface de fixation de la garniture par application de la composition d'amorçage favorisant l'adhérence ;
éventuellement, positionner le panneau préparé sur la garniture préformée après que la garniture est disposée selon la configuration prédéterminée ;
amener le panneau au contact de la garniture ; et
chauffer l'interface de contact entre le panneau et la garniture pour fixer la garniture au panneau.

3. Procédé selon la revendication 1 ou 2, comprenant en outre le chauffage de la garniture (40) avant entrée en contact avec le panneau (22).

4. Procédé selon la revendication 2 ou 3, dans lequel le chauffage est réalisé en dirigeant une énergie infrarouge à travers le panneau, par exemple en focalisant un faisceau de rayons infrarouges contrôlé dans le panneau à partir d'un côté opposé à celui qui reçoit la garniture.

5. Procédé selon l'une quelconque des revendications qui précèdent, dans lequel l'étape consistant à presser ou forcer le panneau au contact de la garniture comprend l'étape consistant à entraîner le panneau vers la garniture sous l'action d'un vide.

6. Assemblage de panneau (20) comprenant :
un panneau (22) ayant une première et une deuxième surfaces se terminant par un bord périphérique (28) ; et
une garniture, caractérisé en ce que :
un revêtement d'amorçage (60) est appliqué à au moins une des surfaces ; et
la garniture (40) est formée séparément du panneau et est fixée à la au moins une surface de panneau recouverte avec le revêtement d'amorçage par application de chaleur et d'une pression exercée sur une zone de contact entre le panneau et la garniture.

7. Procédé d'installation d'un assemblage de panneau (20) dans une ouverture (30), de préférence dans un véhicule, ce procédé comprenant la fixation ou l'attache d'un assemblage de panneau selon la revendication 6 ou fabriqué par un procédé selon l'une quelconque des revendications 1 à 5 à des moyens de support de sorte que le panneau s'étend à l'intérieur d'au moins une partie de l'ouverture.

8. Véhicule doté d'un assemblage de panneau selon la revendication 6, ou installé dans une ouverture selon la revendication 7, ou fabriqué par un procédé selon l'une quelconque des revendications 1 à 5.
